# EUROPEAN PATENT SPECIFICATION

(11) **EP 2 754 922 B1**
(45) Date of publication and mention of the grant of the patent: **31.10.2018**
(21) Application number: 13150855.8
(22) Date of filing: 10.01.2013
(51) Int. Cl.: F16H 59/04

(54) **SHIFTER ASSEMBLY HAVING A BIASED BUSHING**
Schalteranordnung mit einer vorgespannten Buchse
Ensemble sélecteur de vitesses ayant un manchon sollicité

(43) Date of publication of application: 16.07.2014
(73) Proprietor: Kongsberg Driveline Systems SAS, 74302 Cluses Cedex (FR)
(72) Inventor: Salle, Frédérik, 74490 Megevette, Haute-Savoie (FR)
(74) Representative: Uexküll & Stolberg

(56) References cited:
- EP-A2- 0 985 854
- GB-A- 2 170 265
- US-A- 4 492 130
- US-A- 4 873 884
- US-A- 5 247 848

## Description

### BACKGROUND OF THE INVENTION

### 1. Field of the Invention

A shifter assembly for selecting one of a plurality of gears of a transmission of a vehicle. In particular, the subject invention relates to a unique design of a bushing for reducing free-play within the shifter assembly.

### 2. Description of Related Art

There is a desire within the industries utilizing shifter assemblies to reduce free-play between a shift lever and a housing of the shifter assembly. Many techniques have been used to reduce the free-play within the shifter assembly. One solution in the industry is disclosed in U.S. Patent No. 5,247,848 (the '848 patent) on which the preamble of claim 1 is based. Specifically, the '848 patent discloses a housing 1 with a gear shift lever 2 partially disposed in the housing 1. A ball 5 and a socket 4 are coupled within the housing 1. The gear shift lever 2 is fixed to the ball 5. A radially resilient sector 13 abuts the ball 5 and a locking ring 23 abuts the sector 13. The sector has an inclined surface 24 and a horizontal surface 25. A retaining ring 20 abuts the locking ring. Specifically, the locking ring 23 has axial and radial tongues 27, 28 that abut the retaining ring 20 to force the locking ring 23 into contact with the inclined surface 24 and the horizontal surface 25 of the sector 13 to produce axial and radial forces for reducing free-play of the shift lever 2 and ball 5. The locking ring 23 has a unique configuration that requires proper orientation within the housing in order to function correctly. Furthermore, the radially resilient sector 13 requires multiple surfaces 24, 25 to accept the axial and radial forces from the locking ring 23 for reducing free-play of the ball 5.

Therefore, there remains an opportunity to develop a shifter assembly that more efficiently reduces lash between a shift lever and a housing.

### SUMMARY OF THE INVENTION AND ADVANTAGES

The subject invention provides for a shifter assembly for selecting one of a plurality of gears of a transmission of a vehicle. The shifter assembly includes a housing defining an interior and having at least one first engagement surface and at least one second engagement surface transverse to each other. The shifter assembly further includes a ball disposed within the interior and defines a spherical center. The ball is rotatable about the spherical center. A lever is at least partially disposed within the interior and coupled to the ball. The lever is rotatable with the ball as a unit about the spherical center. The shifter assembly further includes at least one bushing disposed within the interior and engaging the ball and at least one biasing member disposed within the interior between the engagement surfaces and the bushing with the biasing member and the bushing supporting the ball within the interior. The at least one bushing has an abutment surface and a bias surface. The abutment surface engages the ball. The bias surface faces the first and second engagement surfaces and defines a plane generally aligned with the bias surface and intersecting the first and second engagement surfaces at an angle. The biasing member engages each of the first and second engagement surfaces and the bias surface with the general alignment of the bias surface at the angle causing the biasing member to concurrently bias the bushing away from the first and second engagement surfaces to support the ball within the housing. According to the present invention, the bushing has an alignment surface extending substantially parallel to said second engagement surface of said housing with said alignment surface selectively abutting said second engagement surface as said bushing pivots toward and away from said first engagement surface to orient said bushing relative to said housing, wherein said bushing has a first wall and a second wall transverse to each other with said abutment surface disposed upon said first wall and said alignment surface disposed upon said second wall, and wherein said bushing defines a groove between said first and second walls and includes a plurality of ribs disposed within said groove extending between and mounted to each of said first and second walls for supporting said first and second walls relative to each other.

Accordingly, the subject invention provides for simplified shifter assembly having reduced free-play with the shifter assembly having a ball, a biasing member, and a bushing abutting the ball. The ball has a single angled bias surface engaged by the biasing member for supporting the ball within the shifter assembly and reducing free-play.

### BRIEF DESCRIPTION OF THE DRAWINGS

Advantages of the subject invention will be readily appreciated as the same becomes better understood by reference to the following detailed description when considered in connection with the accompanying drawings.
Figure 1 is a perspective view of a shifter assembly;
Figure 2 is an exploded view of the shifter assembly;
Figure 3 is a perspective view of a body of a housing of the shifter assembly;
Figure 4 is plan view of the shifter assembly with the housing removed;
Figure 5 is a cross-sectional view of the shifter assembly;
Figure 6 is a cross-sectional view of the shifter assembly having a trunnion and a ball defining a recess with the ball pivoted into the recess; and
Figure 7 is a cross-sectional view of an alternative embodiment of the shifter assembly.

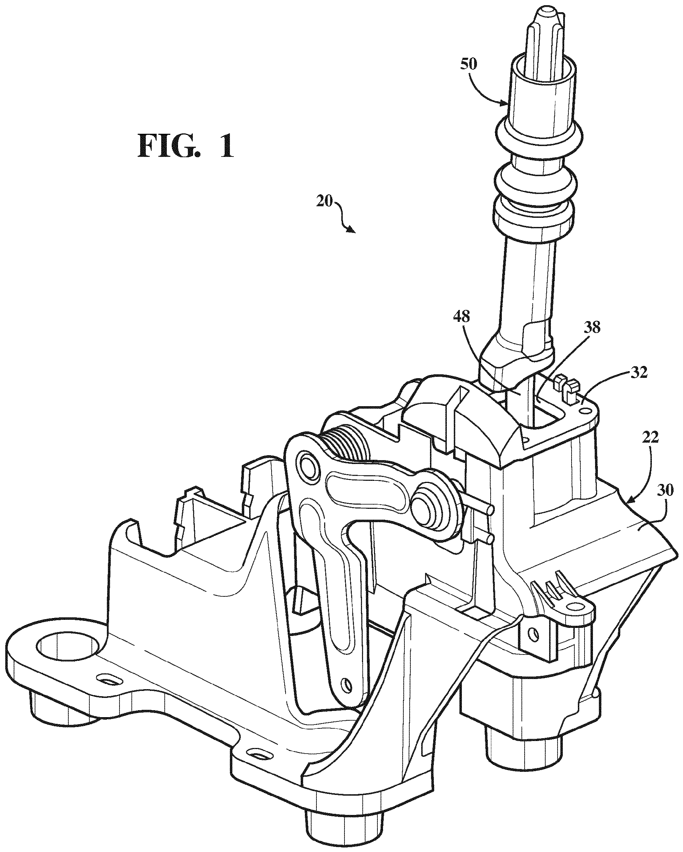

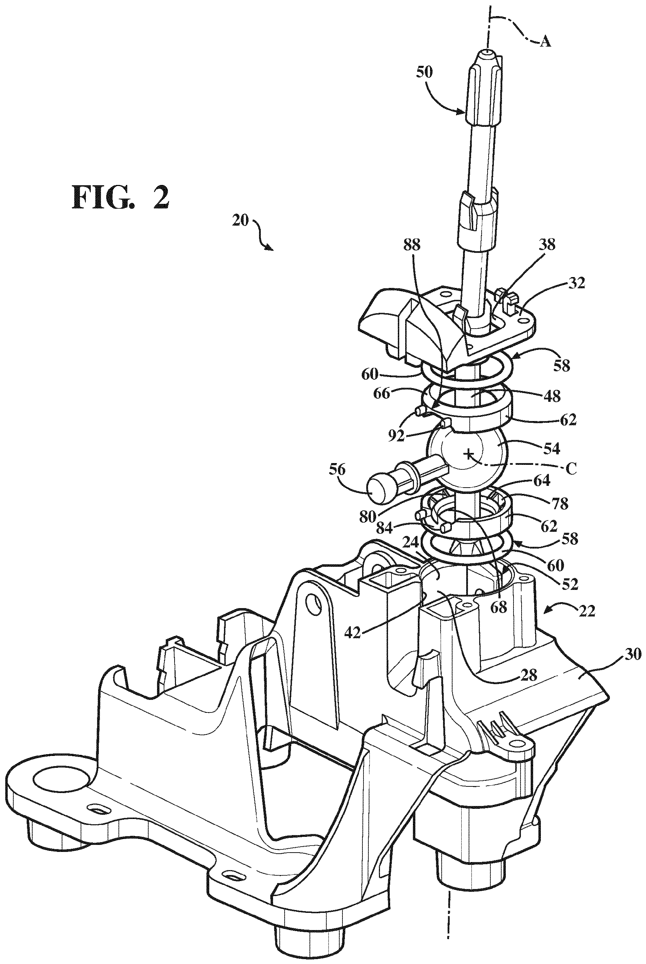

Referring to the Figures, wherein like numerals indicate like or corresponding parts throughout the several views, a shifter assembly 20 for selecting one of a plurality of gears of a transmission of a vehicle is generally shown in Figures 1 and 2. The shifter assembly 20 is typically utilized as a cable operated shifter assembly, as known in the art. However, it is to be appreciated that the shifter assembly 20 can be utilized in any suitable manner, including but not limited to a shift-by-wire shifter assembly, to select one of the plurality of gears of the transmission of the vehicle.

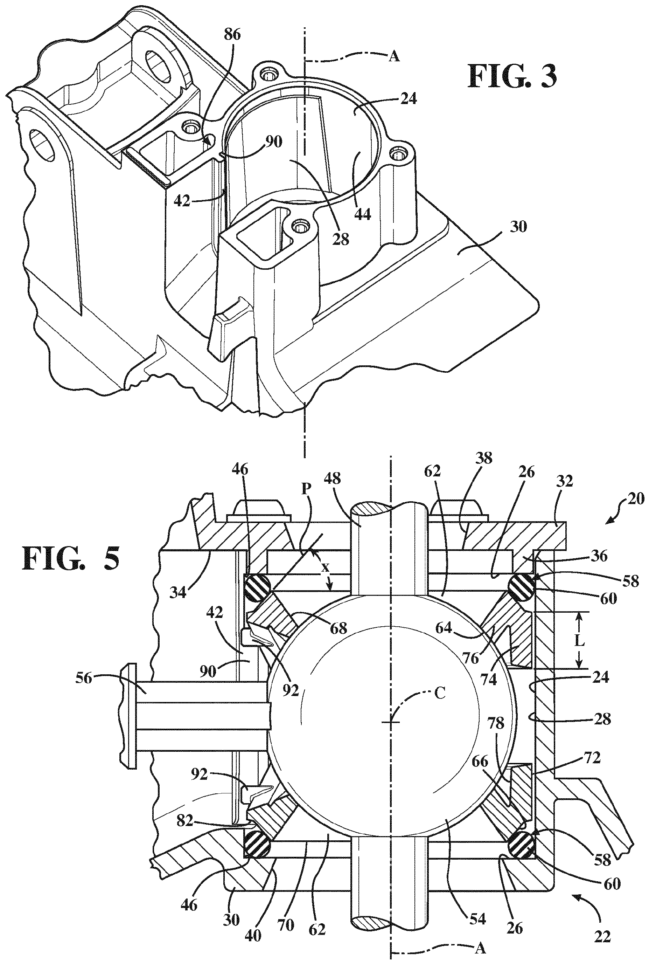

As shown in Figure 5, the shifter assembly 20 includes a housing 22 defining an interior 24 and having at least one first engagement surface 26 and at least one second engagement surface 28 transverse to each other. The housing 22 includes a body 30 and a cap 32 with the cap 32 having a third engagement surface 34 engaging the body 30 and facing the interior 24. The third engagement surface 34 engages the body 30 when the cap 32 is fixed to the body 30. The cap 32 is fixed to the body 30 by fasteners or any other suitable configuration. The interior 24 is further defined by the body 30 and cap 32. The interior 24 typically has a cylindrical configuration with the first and second engagement surfaces 26, 28 disposed within the interior 24. The housing 22 defines an axis A with the cylindrically configured interior 24 extending longitudinally along the axis A. The at least one first engagement surface 26 is further defined as a pair of first engagement surfaces 26 with the pair of first engagement surfaces 26 disposed opposite and facing one another and at least partially defining ends of the cylindrically configured interior 24. The cap 32 has a protrusion 36 extending from the third engagement surface 34 with the first engagement surface 26 disposed on the protrusion 36. More specifically, the protrusion 36 extends to a distal end with one of the pair of first engagement surfaces 26 disposed on the protrusion 36. The protrusion 36 has an annular configuration with the protrusion 36 extending radially about the axis A adjacent the second engagement surface 28. The at least one second engagement surface 28 is further defined as a single second engagement surface 28 having a substantially circular configuration extending radially about the axis A and extending longitudinally along the axis A between the pair of first engagement surface 26. Furthermore, the body 30 of the housing 22 has the one of the pair of first engagement surfaces 26 and the second engagement surface 28. Although in the exemplary embodiment the interior 24 has a cylindrical configuration, it is to be appreciated the interior 24 can have any suitable configuration.

The housing 22 defines an opening 38. Specifically, the cap 32 of the housing 22 defines the opening 38 extending through the third engagement surface 34 into the interior 24. The housing 22 also defines an aperture 40 opposite the opening 38. More specifically, the body 30 of the housing 22 defines the aperture 40 extending through the first engagement surface 26 into the interior 24. Furthermore, the housing 22 defines a trunnion opening 42 transverse to the opening 38. Specifically, the body 30 of the housing 22 defines the trunnion opening 42 extending through the second engagement surface 28 into the interior 24. The opening 38, the aperture 40, and the trunnion opening 42 will be better understood through further discussion below.

As shown in Figure 3, the housing 22 has a draft surface 44 disposed within the interior 24 adjacent to the second engagement surface 28. More specifically, the draft surface 44 extends with the second engagement surface 28 between the pair of first engagement surfaces 26. The draft surface 44 extends at a draft angle relative to the second engagement surface 28 between the pair of first engagement surfaces 26. Typically, the body 30 of the housing 22 is formed in a mold by casting or molding process. The draft angle of the draft surface 44 reduces friction within the cylindrically configured interior 24 and facilitates release of the body 30 from the mold. It is to be appreciated that the housing 22 can lack the draft surface 44 such that only the second engagement surface 28 extends between the pair of first engagement surfaces 26. It is also to be appreciated that the body 30 can be produced by any suitable manufacturing process.

As shown in Figure 5, the first engagement surface 26 and the second engagement surface 28 define a corner 46. Specifically, the corner 46 is further defined as a pair of corners 46 with the second engagement surface 28 and the one of the pair of first engagement surfaces 26 defining one of the pair of the corners 46. Likewise, the second engagement surface 28 and the other one of the pair of first engagement surfaces 26 define the other one of the pair of the corners 46. The corners 46 have an angular configuration extending annularly about the axis A.

The shifter assembly 20 includes a lever 48 at least partially disposed within the interior 24. More specifically, the lever 48 has a substantially linear configuration and extends through the interior 24 and through each of the opening 38 and aperture 40. The lever 48 has a first end 50 and a second end 52 with the first end 50 disposed outside of the housing 22 adjacent the opening 38 and the second end 52 disposed outside of the housing 22 adjacent the aperture 40. The second end 52 of the lever 48 is coupled to the transmission of the vehicle. A user can manipulate the lever 48 at the first end 50 to facilitate selecting one of the plurality of gears of the transmission at the second end 52.

The shifter assembly 20 includes a ball 54 disposed within the interior 24 and defining a spherical center C. The ball 54 is rotatable about the spherical center C. The ball 54 typically has a spherical configuration with the spherical center C positioned at the geometric center of the spherically configured ball 54. However, the ball 54 can have any suitable configuration for rotating about the spherical center C. The lever 48 is at least partially disposed within the interior 24 and is coupled to the ball 54. The lever 48 is rotatable with the ball 54 as a unit about the spherical center C. Furthermore, the lever 48 extends through the opening 38 into the interior 24 for rotating the lever 48 and the ball 54 as a unit about the spherical center C. The lever 48 extends through the ball 54 such that the lever 48 extends through each of the opening 38 and the aperture 40 of the housing 22.

The ball 54 has a trunnion 56 extending outwardly from the ball 54 transverse to the lever 48 and rotatable with the ball 54 and the lever 48 about the spherical center C for coupling the lever 48 to the transmission. The trunnion 56 extends substantially perpendicular to the lever 48, but can extend at any angle transverse to the lever 48. The trunnion 56 extends through the trunnion opening 42 of the housing 22 and is coupled the transmission outside of the housing 22. As mentioned above, the second end 52 of the lever 48 is also coupled to the transmission. The ball 54, the trunnion 56, and the lever 48 rotate as a unit about the spherical center C. Rotation of the ball 54, the trunnion 56, and the lever 48 causes respective movement of the trunnion 56 and the second end 52 of the lever 48 relative to the transmission. The relative movement of the trunnion 56 and the second end 52 of the lever 48 facilitates the selection of one of the plurality of gears of the transmission.

The shifter assembly 20 includes at least one biasing member 58 disposed within the interior 24. The biasing member 58 is further defined as an o-ring 60 having an annular configuration, as shown in Figure 2. The o-ring 60 is disposed within the interior 24 and radially surrounds the axis A, as shown in Figure 5. The annular configuration of the o-ring 60 facilitates engagement of the o-ring 60 with each of the first and second engagement surfaces 26, 28 within the cylindrically configured interior 24. Specifically, the annular configuration of the o-ring 60 facilitating radial engagement of the o-ring 60 with the circularly configured second engagement surface 28. Furthermore, o-ring 60 is disposed within the corner 46 and abuts the first engagement surface 26.

The shifter assembly 20 includes at least one bushing 62 disposed within the interior 24 and engaging the ball 54. The shifter assembly 20 is characterized by the at least one bushing 62 having an abutment surface 64 and a bias surface 66 with the abutment surface 64 engaging the ball 54 and the bias surface 66 facing the first and second engagement surfaces 26, 28 and defining a plane P generally aligned with the bias surface 66 and intersecting the first and second engagement surfaces 26, 28 at an angle X. More specifically, the plane P is further defined as an instantaneous plane P and will be described in greater detail below. The bias surface 66 and the abutment are disposed opposite one another on the bushing 62 with the abutment surface 64 facing inwardly into the interior 24. The bias surface 66 of the bushing 62 faces the corner 46. More specifically, the bias surface 66 faces the proximate corner 46. The bias surface 66 typically has a linear configuration with the bias surface 66 aligned with the plane P. However, the bias surface 66 can be a non-linear configuration that generally aligns with the plane P. The biasing member 58 is disposed within the corner 46 and engages each of the first and second engagement surfaces 26, 28 and the bias surface 66 for biasing the bushing 62 away from the first and second engagement surfaces 26, 28.

The angle X of the plane P is 45 degrees and the bias surface 66 facilitates a compression ratio of the o-ring 60 of 1:1 x cos45°. More specifically, the angle X of the plane P is 45 degrees relative to the first engagement surface 26, which facilitates even biasing of the bushing 62 by the o-ring 60 both away from the first engagement surface 26 and away from the second engagement surface 28. It is to be appreciated that the angle X of plane P can be any angle without departing from the scope of the subject invention. Furthermore, it is to be appreciated that varying the angle X of the plane P can produce varying compression ratios of the o-ring 60 resulting in variations in the bias of the o-ring 60 on the bushing 62 away from the first engagement surface 26 and variations in the bias of the o-ring 60 on the bushing 62 away from the second engagement surface 28.

As shown in Figure 2, the bushing 62 has an annular configuration defining a hole 68 with the ball 54 extending into the hole 68 and the abutment surface 64 circumferentially engaging the ball 54 to support the ball 54 within the housing 22. The at least one bushing 62 is disposed within the interior 24 with the bushing 62 radially surrounding the axis A, as shown in Figure 5. As described above, the plane P is further defined as an instantaneous plane P. The instantaneousness of the plane P refers to the selective disposition of the plane P about the annularly configured bushing 62. The plane P is disposed tangential to the annularly configured bushing 62 such that the plane P generally aligns with the bias surface 66. Said differently, the plane P is disposed tangential to and figuratively "touches" the annularly configured bushing 62 at the bias surface 66. The plane P is movable and can be disposed anywhere about the annularly configured bushing 62 in which the plane P generally aligns with the bias surface 66 and is tangential to the bushing 62.

The annular configuration of the bushing 62 radially follows the circular configuration of the second engagement surface 28 such that the bushing 62 is proximate to the first and second engagement surfaces 26, 28. Said differently, the bushing 62 is spaced from the first and second engagement surfaces 26, 28. As described above, the biasing member 58 is further defined as the o-ring 60 having the annular configuration. The o-ring 60 abuts the bias surface 66 of the bushing 62, having the annular configuration, for biasing the bushing 62 away from each of the first and second engagement surfaces 26, 28. The spacing of the bushing 62 from the first and second engagement surfaces 26, 28 and the biasing of the bushing 62 by the o-ring 60 will be better understood through greater discussion below.

The bushing 62 has an outer surface 70 opposite the abutment surface 64 with the ball 54 extending into the hole 68 at the abutment surface 64 and the ball 54 being partially disposed within the hole 68 between the abutment surface 64 and the outer surface 70. The outer surface 70 faces the proximate first engagement surface 26 of the housing 22. The partial disposition of the ball 54 within the hole 68 of the bushing 62 facilitates "cupping" of the ball 54 by the bushing 62. Said differently, with the ball 54 partially disposed within the hole 68, the abutment surface 64 is disposed proximate the spherical center C of the ball 54. The abutment surface 64 has an arcuate configuration to engage the spherically configured ball 54. The arcuate configuration of the bushing 62 in conjunction with the partial disposition of the ball 54 within the hole 68 prevents movement of the ball 54 relative to the bushing 62 longitudinally along the axis A toward the bushing 62 and movement of the ball 54 relative to the bushing 62 lateral to the axis A toward the second engagement surface 28.

In an alternative embodiment, the abutment surface 64 can define a plurality of ball bearings abutting the ball 54. The plurality of ball bearings rotate along the ball 54 relative to the bushing 62 as the ball 54 rotates about the spherical center C. Rotation of the ball bearings along the ball 54 reduces the friction exerted by the bushing 62 on the ball 54.

As shown in Figure 5, the bushing 62 has an alignment surface 72 extending substantially parallel to the second engagement surface 28 of the housing 22 with the alignment surface 72 selectively abutting the second engagement surface 28 as the bushing 62 pivots toward and away from the first engagement surface 26 to orient the bushing 62 relative to the housing 22. As described above, the bushing 62 is spaced from the second engagement surface 28. More specifically, the alignment surface 72 is spaced from the second engagement surface 28. Typically, the alignment surface 72 is marginally spaced from the second engagement surface 28, such that the alignment surface 72 is spaced enough from the second engagement surface 28 to facilitate sliding of the bushing 62 relative to the housing 22. Sliding of the bushing 62 relative to the housing 22 eases insertion of the bushing 62 into the interior 24 while maintaining a proximate relationship of the bushing 62 with the second engagement surface 28.

The alignment surface 72 has a length L. The length L of the alignment surface 72 is substantial such that rotation of the bushing 62 relative to the housing 22 toward the first engagement surface 26 causes angular engagement of the alignment surface 72 with the second engagement surface 28. As the length L of the alignment surface 72 increases, the alignment surface 72 angularly engages the wall at less of an angle of rotation of the bushing 62 relative to the housing 22 as the bushing 62 rotates toward the first engagement surface 26. Said differently, as the length L of the alignment surface 72 increases, the rotation of the bushing 62 relative to the housing 22 toward the first engagement surface 26 decreases. Engagement of the alignment surface 72 with the second engagement surface 28 maintains proper alignment of the bushing 62 within interior 24 such that the abutment surface 64 engages the ball 54.

The bushing 62 has a first wall 74 and a second wall 76 transverse to each other with the abutment surface 64 disposed upon the first wall 74 and the alignment surface 72 disposed upon the second wall 76. The first wall 74 is angled substantially toward the spherical center C of the ball 54 and extends to a distal end. The abutment surface 64 is disposed at the distal end of the first wall 74 and engages the ball 54. The second wall 76 extends substantially parallel to the second engagement surface 28. The alignment surface 72 is disposed on the second wall 76 facing the second engagement surface 28 and extending longitudinally along the second wall 76. As such, the length L of the alignment surface 72 is imputed as the length L of the second wall 76. The second wall 76 can be elongated to increase the length L of the alignment surface 72 or shortened to decrease the length L of the alignment surface 72.

The bushing 62 defines a groove 78 between the first and second walls 74, 76 and includes a plurality of ribs 80 disposed within the groove 78 extending between and mounted to each of the first and second walls 74, 76 for supporting the first and second walls 74, 76 relative to each other, as shown in Figure 2. The groove 78 extends annularly about the bushing 62. The ribs 80 are spaced from one another within the groove 78 and are integral with each of the first and second walls 74, 76. The transverse relationship between the first and second walls 74, 76 results in deflection between the first and second walls 74, 76 as a force is exerted on either or both of the first and second walls 74, 76. The ribs 80 brace the first and second walls 74, 76 and limit the deflection of the first and second walls 74, 76 toward and away from each other.

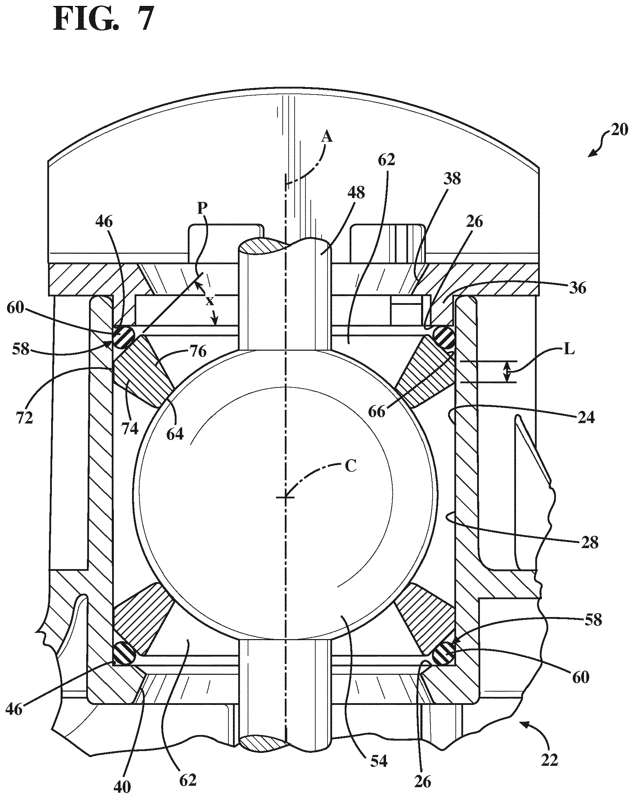

In an alternative embodiment, the bushing 62 does not define the groove 78, as shown in Figure 7. Said differently, the first and second walls 74, 76 are a unitary component with first and second walls 74, 76 not distinct from one another. It is to be appreciated that the first and second walls 74, 76 of the bushing 62 can be in any configuration without escaping the scope of the subject invention.

As shown in Figure 5, the bushing 62 has a retaining surface 82 adjacent and extending transverse to the bias surface 66 toward the second engagement surface 28 to retain the biasing member 58 within the corner 46. Said differently, the retaining surface 82 maintains the o-ring 60 within the corner 46. The retaining surface 82 is substantially parallel to the first engagement surface 26 of the housing 22. The o-ring 60 selectively engages the retaining surface 82. Engagement of the o-ring 60 with the retaining surface 82 prevents the o-ring 60 from becoming pinched between the alignment surface 72 and the second engagement surface 28. In doing so, the o-ring 60 is maintained within the corner 46 and the o-ring 60 does not experience undue wear that occurs when the o-ring 60 slips between the alignment surface 72 and the second engagement surface 28.

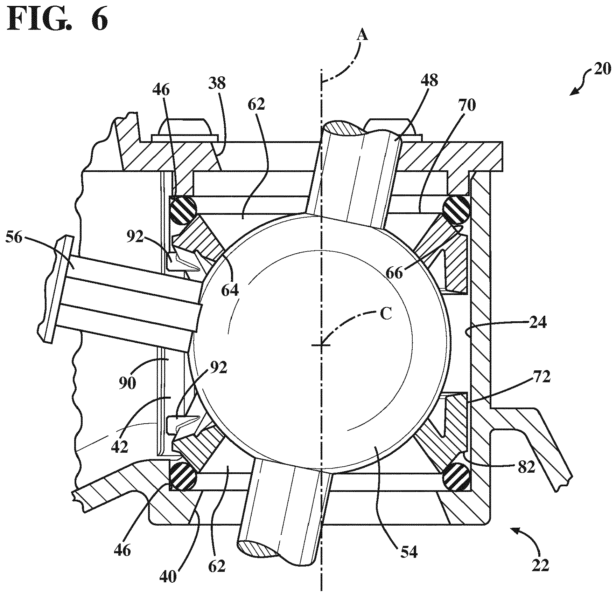

As shown in Figure 2, the bushing 62 defines a recess 84 with the trunnion 56 capable of pivoting into the recess 84 as the ball 54 rotates about the spherical center C for extending movement of the trunnion 56 in a range of motion. The recess 84 has a semi-spherical configuration extending partially into the bushing 62 along the first and second walls 74, 76 from the abutment surface 64 toward outer surface 70. The recess 84 faces the trunnion opening 42 of the housing 22. The range of motion of the trunnion 56 is defined as movement of the trunnion 56 within the trunnion opening 42 toward and away from the first engagement surface 26 as the ball 54, the lever 48, and the trunnion 56 rotate as a unit about the spherical center C, as shown in Figure 6. The recess 84 allows the trunnion 56 to move into the bushing 62 as the trunnion 56 moves in the range of motion.

As shown in Figures 2 and 3, the housing 22 has a first anti-rotation feature 86 and the bushing 62 has a second anti-rotation feature 88 with the first and second anti-rotation features 86, 88 engaging each other to prevent rotation of the bushing 62 relative to the housing 22. The first anti-rotation feature 86 is further defined as at least one lock wall 90 and the second anti-rotation feature 88 is further defined as at least one post 92 with the post 92 selectively engaging the lock wall 90 to prevent rotation of the bushing 62 relative to the housing 22. The at least one lock wall 90 is further defined as two lock walls 90 with each of the lock walls 90 disposed on the body 30 of the housing 22 adjacent to the trunnion opening 42, as shown in Figure 3. The two lock walls 90 extend along the trunnion opening 42 toward each of the pair of first engagement surfaces 26. The two lock walls 90 are disposed opposite one another along the trunnion opening 42 such that the lock walls 90 face each other.

The at least one post 92 is further defined as two posts 92 extending from the bushing 62 adjacent the recess 84, as shown in Figure 2. The posts 92 extend toward the trunnion opening 42 and are disposed between the two lock walls 90. More specifically, one of the posts 92 is disposed adjacent to the one of the lock walls 90 and the other one of the posts 92 is disposed adjacent to the other one of the lock walls 90.

The bushing 62 is rotatable about the axis A in a first rotational direction and a second rotational direction opposite the first rotational direction. As the bushing 62 rotates in the first rotational direction, the one of the posts 92 selectively engages the one of the lock walls 90, stopping rotation of the bushing 62 in the first rotational direction. As the bushing 62 rotates in the second rotational direction, the other one of the posts 92 selectively engages the other one of the lock walls 90, stopping rotation of the bushing 62 in the second rotational direction.

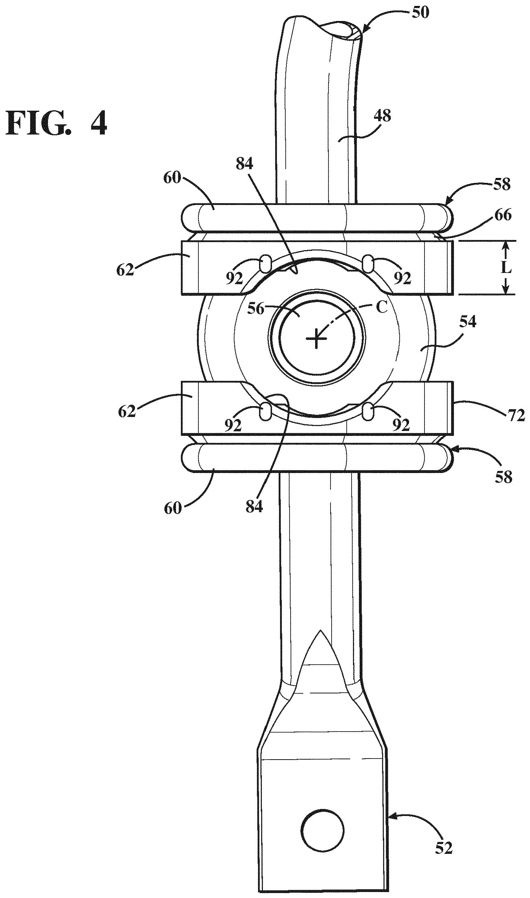

As shown in Figures 4 and 5, the at least one biasing member 58 is further defined as two biasing members 58. More specifically, the two biasing members 58 are two o-rings 60 with one of the o-rings 60 abutting one of the pair of first engagement surfaces 26 and the other one of the o-rings 60 abutting the other one of the pair of first engagement surfaces 26. Said differently, the o-rings 60 are disposed opposite one another within the interior 24. Each of the o-rings 60 engage the second engagement surface 28 of the housing 22.

The at least one bushing 62 is further defined as two bushings 62. The bushings 62 are disposed opposite one another and the biasing members 58 are disposed opposite one another and adjacent to the bushings 62. Said differently, the bushings 62 and the biasing members 58 are mirror images of each other within the interior 24 with one of the bushings 62 and one of the biasing members 58 disposed proximate the one of the pair of first engagement surfaces 26 and the other one of the bushings 62 and other one of the biasing members 58 disposed proximate the other one of the pair of first engagement surfaces 26. The biasing members 58 bias the bushings 62 toward each other to support the ball 54 within the housing 22.

As discussed above, the at least one biasing member 58 is disposed within the interior 24 between the engagement surfaces 26, 28 and the bushing 62, as shown in Figure 5. The biasing member 58 and the bushing 62 support the ball 54 within the interior 24. Specifically, the biasing member 58 engages each of the first and second engagement surfaces 26, 28 and the bias surface 66. The general alignment of the bias surface 66 with the plane P at the angle X causes the biasing member 58 to concurrently bias the bushing 62 away from the first and second engagement surfaces 26, 28 to support the ball 54 within the housing 22. The ball 54 is cupped by each of the bushings 62 further preventing movement of the ball 54 and the lever 48 relative to the bushing 62 longitudinally along the axis A toward the bushing 62 and movement of the ball 54 and the lever 48 relative to the bushing 62 lateral to the axis A toward the second engagement surface 28. The bias exerted by each of the biasing members 58 on each of the bushings 62 away from the first engage surfaces prevents movement of the ball 54, the lever 48, and the bushings 62 relative to the housing 22 longitudinally along the axis A toward either of the first engagement surfaces 26. The bias exerted by each of the biasing members 58 on each of the bushings 62 away from the circularly configured second engage surfaces prevents movement of the ball 54, the lever 48, and the bushings 62 relative to the housing 22 lateral to the axis A toward the second engagement surface 28. In doing so, free-play of the lever 48 and ball 54 relative to the housing 22 is reduced.

The invention has been described in an illustrative manner, and it is to be understood that the terminology which has been used is intended to be in the nature of words of description rather than of limitation. As is now apparent to those skilled in the art, many modifications and variations of the subject invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. A shifter assembly (20) for selecting one of a plurality of gears of a transmission of a vehicle, said shifter assembly (20) comprising:
a housing (22) defining an interior (24) and having at least one first engagement surface (26) and at least one second engagement surface (28) transverse to each other;
a ball (54) disposed within said interior (24) and defining a spherical center (C) with said ball (54) rotatable about said spherical center (C);
a lever (48) at least partially disposed within said interior (24) and coupled to said ball (54) with said lever (48) rotatable with said ball (54) as a unit about said spherical center (C);
at least one bushing (62) disposed within said interior (24) and engaging said ball (54); and
at least one biasing member (58) disposed within said interior (24) between said engagement surfaces (26, 28) and said bushing (62) with said biasing member (58) and said bushing (62) supporting said ball (54) within said interior (24);
wherein said at least one bushing (62) having an abutment surface (64) and a bias surface (66) with said abutment surface (64) engaging said ball (54) and said bias surface (66) facing said first and second engagement surfaces (26, 28) and defining a plane (P) generally aligned with said bias surface (66) and intersecting said first and second engagement surfaces (26, 28) at an angle (X), said biasing member (58) engaging each of said first and second engagement surfaces (26, 28) and said bias surface (66) with said general alignment of said bias surface (66) at said angle (X) causing said biasing member (58) to concurrently bias said bushing (62) away from said first and second engagement surfaces (26, 28) to support said ball (54) within said interior (24)
**characterized in that** said bushing (62) has an alignment surface (72) extending substantially parallel to said second engagement surface (28) of said housing (22) with said alignment surface (72) selectively abutting said second engagement surface (28) as said bushing (62) pivots toward and away from said first engagement surface (26) to orient said bushing (62) relative to said housing (22),
wherein said bushing (62) has a first wall (74) and a second wall (76) transverse to each other with said abutment surface (64) disposed upon said first wall (74) and said alignment surface (72) disposed upon said second wall (76); and
wherein said bushing (62) defines a groove (78) between said first and second walls (74, 76) and includes a plurality of ribs (80) disposed within said groove (78) extending between and mounted to each of said first and second walls (74, 76) for supporting said first and second walls (74, 76) relative to each other.

2. A shifter assembly (20) as set forth in claim 1 wherein said first engagement surface (26) and said second engagement surface (28) define a corner (46) and said bias surface (66) of said bushing (62) faces said corner (46) with said biasing member (58) disposed within said corner (46) and engaging each of said first and second engagement surfaces (26, 28) and said bias surface (66) for biasing said bushing (62) away from said first and second engagement surfaces (26, 28).

3. A shifter assembly (20) as set forth in claim 2 wherein said bushing (62) has a retaining surface (82) adjacent and extending transverse to said bias surface (66) toward said second engagement surface (28) to retain said biasing member (58) within said corner (46).

4. A shifter assembly (20) as set forth in any of the previous claims wherein said bushing (62) has an annular configuration defining a hole (68) with said ball (54) extending into said hole (68) and said abutment surface (64) circumferentially engaging said ball (54) to support said ball (54) within said interior (24).

5. A shifter assembly (20) as set forth in claim 4 wherein said bushing (62) has an outer surface (70) opposite said abutment surface (64) with said ball (54) extending into said hole (68) at said abutment surface (64) and said ball (54) being partially disposed within said hole (68) between said abutment surface (64) and said outer surface (70).

6. A shifter assembly (20) as set forth in claim 4 wherein said biasing member (58) is further defined as an o-ring (60) having an annular configuration with said o-ring (60) abutting said bias surface (66) of said bushing (62) having said annular configuration for biasing said bushing (62) away from each of said first and second engagement surfaces (26, 28).

7. A shifter assembly (20) as set forth in claim 6 wherein said angle (X) of said plane (P) is 45 degrees and said bias surface (66) facilitates a compression ratio of said o-ring (60) of 1:1 x cos45°.

8. A shifter assembly (20) as set forth in any of the previous claims wherein said ball (54) has a trunnion (56) extending outwardly from said ball (54) transverse to said lever (48) and rotatable with said ball (54) and said lever (48) about said spherical center (C) for coupling said lever (48) to the transmission, said bushing (62) defining a recess (84) with said trunnion (56) capable of pivoting into said recess (84) as said ball (54) rotates about said spherical center (C) for extending movement of said trunnion (56) in a range of motion.

9. A shifter assembly (20) as set forth in any of the previous claims wherein said housing (22) has a first anti-rotation feature (86) and said bushing (62) has a second anti-rotation feature (88) with said first and second anti-rotation features (86, 88) engaging each other to prevent rotation of said bushing (62) relative to said housing (22).

10. A shifter assembly (20) as set forth in claim 9 wherein said first anti-rotation feature (86) is further defined as at least one lock wall (90) and said second anti-rotation feature (88) is further defined as at least one post (92) with said post (92) selectively engaging said lock wall (90) to prevent rotation of said bushing (62) relative to said housing (22).

11. A shifter assembly (20) as set forth in any of the previous claims wherein said housing (22) defines an opening (38) with said lever (48) extending through said opening (38) into said interior (24) for rotating said lever (48) and said ball (54) as a unit about said spherical center (C).

12. A shifter assembly (20) as set forth in any of the previous claims wherein said at least one bushing (62) is further defined as two bushings (62) and said at least one biasing member (58) is further defined as two biasing members (58), said bushings (62) disposed opposite one another and said biasing members (58) disposed opposite one another and adjacent to said bushings (62) with said biasing members (58) biasing said bushings (62) toward each other to support said ball (54) within said interior (24).

13. A shifter assembly (20) as set forth in any of the previous claims wherein said housing (22) includes a body (30) and a cap (32) with said cap (32) having a third engagement surface (34) engaging said body (30) and facing said interior (24).

14. A shifter assembly (20) as set forth in claim 13 wherein said cap (32) has a protrusion (36) extending from said third engagement surface (34) with said first engagement surface (26) disposed on said protrusion (36).

## Patentansprüche

1. Schalteranordnung (20) zum Auswählen von einem aus einer Mehrzahl von Gängen eines Getriebes eines Fahrzeugs, wobei die Schalteranordnung (20) aufweist:
ein Gehäuse (22), das einen Innenraum (24) definiert und wenigstens eine erste Anlagefläche (26) und wenigstens eine zweite Anlagefläche (28) aufweist, die quer zueinander verlaufen,
eine Kugel (54), die in dem Innenraum (24) angeordnet ist und ein Sphärenzentrum (C) definiert, wobei die Kugel (54) um das Sphärenzentrum (C) drehbar ist,
einen Hebel (48), der wenigstens teilweise in dem Innenraum (24) liegt und mit der Kugel (54) verbunden ist, wobei der Hebel (48) mit der Kugel (54) als Einheit um das Sphärenzentrum (C) drehbar ist,
wenigstens eine Buchse (62), die in dem Innenraum (24) angeordnet ist und an der Kugel (54) anliegt, und
wenigstens ein Vorspannteil (58), das in dem Innenraum (24) zwischen den Anlageflächen (26, 28) und der Buchse (62) angeordnet ist, wobei das Vorspannteil (58) und die Buchse (62) die Kugel (54) innerhalb des Innenraums (24) lagern,
wobei die wenigstens eine Buchse (62) eine Anlageoberfläche (64) und eine Vorspannoberfläche (66) hat, wobei die Anlageoberfläche (64) an der Kugel (54) anliegt und die Vorspannoberfläche (66) den ersten und zweiten Anlageflächen (26, 28) zugewandt ist und eine Ebene (P) definiert, die allgemein mit der Vorspannoberfläche (66) ausgerichtet ist und die ersten und zweiten Anlageflächen (26, 28) unter einem Winkel (X) schneidet, wobei das Vorspannteil (58) an jeder der ersten und zweiten Anlageflächen (26, 28) und an der Vorspannoberfläche (66) anliegt, wobei die allgemeine Ausrichtung der Vorspannoberfläche (66) unter dem Winkel (X) das Vorspannteil (58) dazu veranlasst, die Buchse (62) gleichzeitig von den ersten und zweiten Anlageflächen (26, 28) weg zu drücken, um die Kugel (54) innerhalb des Innenraums (24) zu lagern,
**dadurch gekennzeichnet, dass** die Buchse (62) eine Ausrichtoberfläche (72) hat, die im Wesentlichen parallel zu der zweiten Anlagefläche (28) des Gehäuses (22) verläuft, wobei die Ausrichtoberfläche (72) selektiv in Anlage an die zweiten Anlagefläche (28) kommt, wenn die Buchse (62) zu der ersten Anlagefläche (26) hin und davon weg schwenkt, um die Buchse (62) relativ zu dem Gehäuse (22) zu orientieren,
wobei die Buchse (62) eine erste Wand (74) und eine zweite Wand (76) hat, die schräg zueinander stehen, wobei die Anlageoberfläche (64) auf der ersten Wand (74) liegt und die Ausrichtoberfläche (72) auf der zweiten Wand (76) liegt, und
wobei die Buchse (62) eine Aussparung (78) zwischen den ersten und zweite Wänden (74, 76) definiert und eine Mehrzahl von Rippen (80) aufweist, die innerhalb der Aussparung (78) liegen und die zwischen den ersten und zweiten Wänden (74, 76) verlaufen und mit diesen verbunden sind, um die ersten und zweiten Wände (74, 76) relativ zueinander abzustützen.

2. Schalteranordnung (20) nach Anspruch 1, wobei die erste Anlagefläche (26) und die zweite Anlagefläche (28) eine Ecke (46) definieren und die Vorspannoberfläche (66) der Buchse der Ecke (46) zugewandt ist, wobei das Vorspannteil (58) in der Ecke (46) angeordnet ist und an jeder der ersten und zweiten Anlageflächen (26, 28) und an der Vorspannoberfläche (66) anliegt, um die Buchse (62) von den ersten und zweiten Anlageflächen (26, 28) weg vorzuspannen.

3. Schalteranordnung (20) nach Anspruch 2, wobei die Buchse (62) eine Haltefläche (82) hat, die angrenzend an und schräg zu der Vorspannoberfläche (66) zu der zweiten Haltefläche (28) verläuft, um das Vorspannteil (58) innerhalb der Ecke (46) zu halten.

4. Schalteranordnung (20) nach einem der vorhergehenden Ansprüche, wobei die Buchse eine ringförmige Gestaltung hat, die eine Öffnung (68) definiert, wobei die Kugel (54) sich in die Öffnung (68) hinein erstreckt und die Anlageoberfläche (64) umlaufend an der Kugel (54) anliegt, um die Kugel (54) in dem Innenraum (24) zu lagern.

5. Schalteranordnung (20) nach Anspruch 4, wobei die Buchse (62) eine äußere Oberfläche (70) gegenüber der Anlageoberfläche (64) hat, wobei die Kugel (54) sich in die Öffnung (68) bei der Anlageoberfläche (64) erstreckt und die Kugel (54) teilweise innerhalb der Öffnung (68) zwischen der Anlageoberfläche (64) und der äußeren Oberfläche (70) liegt.

6. Schalteranordnung (20) nach Anspruch 4, wobei das Vorspannteil (58) weiter als ein O-Ring (60) definiert ist, der eine ringförmige Gestaltung hat, wobei der O-Ring (60) an der Vorspannoberfläche (66) der Buchse (62), die die ringförmige Gestaltung hat, anliegt, um die Buchse von jeder der ersten und zweiten Anlageflächen (26, 28) weg vorzuspannen.

7. Schalteranordnung (20) nach Anspruch 6, wobei der Winkel (X) der Ebene (P) 45° beträgt und die Vorspannoberfläche (66) ein Kompressionsverhältnis des O-Rings (60) von 1:1 x cos45° ermöglicht.

8. Schalteranordnung (20) nach einem der vorhergehenden Ansprüche, wobei die Kugel (54) einen Zapfen (56) aufweist, der von der Kugel (54) quer zu dem Hebel (48) nach außen verläuft und mit der Kugel (54) und dem Hebel (48) um das Sphärenzentrum (C) drehbar ist, um den Hebel (48) mit dem Getriebe zu koppeln, wobei die Buchse (62) eine Aussparung (84) definiert, wobei der Zapfen (56) dazu in der Lage ist, in die Aussparung (84) zu schwenken, wenn die Kugel (54) sich um das Sphärenzentrum (C) dreht, um die Bewegung des Zapfens (56) in einem Bewegungsbereich auszudehnen.

9. Schalteranordnung (20) nach einem der vorhergehenden Ansprüche, wobei das Gehäuse (22) ein erstes Antirotations-Merkmal (86) und die Buchse (62) ein zweites Antirotations-Merkmal (88) hat, wobei die ersten und zweiten Antirotations-Merkmale (86, 88) miteinander eingreifen, um eine Drehung der Buchse (62) relativ zu dem Gehäuse (22) zu verhindern.

10. Schalteranordnung (20) nach Anspruch 9, wobei das erste erstes Antirotations-Merkmal (86) weiter definiert ist als wenigstens eine Sperrwand (90) und wobei das zweite Antirotations-Merkmal (88) weiter definiert ist als wenigstens ein Stab (92), wobei der Stab (92) selektiv mit der Sperrwand (90) eingreift, um Drehung der Buchse (62) relativ zu dem Gehäuse (22) zu verhindern.

11. Schalteranordnung (20) nach einem der vorhergehenden Ansprüche, wobei das Gehäuse (22) eine Öffnung (38) definiert, wobei der Hebel (48) durch die Öffnung (38) in den Innenraum (24) verläuft, um den Hebel (48) und die Kugel (54) als Einheit um das Sphärenzentrum (C) zu drehen.

12. Schalteranordnung (20) nach einem der vorhergehenden Ansprüche, wobei die wenigstens eine Buchse (62) weiter definiert ist als zwei Buchsen (62) und wobei das wenigstens eine Vorspannteil (58) weiter definiert ist als zwei Vorspannteile (58), wobei die Buchsen (62) einander gegenüberliegend angeordnet sind und wobei die Vorspannteile (58) einander gegenüberliegend und benachbart zu den Buchsen (62) angeordnet sind, wobei die Vorspannteile (58) die Buchsen (62) aufeinander zu vorspannen, um die Kugel (54) innerhalb des Innenraums zu lagern.

13. Schalteranordnung (20) nach einem der vorhergehenden Ansprüche, wobei das Gehäuse (22) einen Körper (30) und einen Deckel (32) aufweist, wobei der Deckel (32) eine dritte Anlagefläche (34) hat, die an dem Körper (30) anliegt und dem Innenraum (24) zugewandt ist.

14. Schalteranordnung (20) nach Anspruch 13, wobei der Deckel (32) einen Vorsprung (36) hat, der von der dritten Anlagefläche (34) vorsteht, wobei die erste Anlagefläche (26) an dem Vorsprung (36) liegt.

## Revendications

1. Ensemble sélecteur de vitesses (20) pour la sélection d'un d'une pluralité de vitesses d'une transmission d'un véhicule, ledit ensemble sélecteur de vitesses (20) comprenant :
un boîtier (22) définissant un intérieur (24) et présentant au moins une première surface de mise en prise (26) et au moins une deuxième surface de mise en prise (28) transversales l'une à l'autre ;
une balle (54) disposée dans ledit intérieur (24) et définissant un centre sphérique (C), ladite balle (54) pouvant tourner autour dudit centre sphérique (C) ;
un levier (48) disposé au moins partiellement dans ledit intérieur (24) et couplé à ladite balle (54), ledit levier (48) pouvant tourner avec ladite balle (54) en tant qu'unité autour dudit centre sphérique (C) ;
au moins un manchon (62) disposé dans ledit intérieur (24) et mettant en prise ladite balle (54) ; et
au moins un élément de sollicitation (58) disposé dans ledit intérieur (24) entre lesdites surfaces de mise en prise (26, 28) et ledit manchon (62), ledit élément de sollicitation (58) et ledit manchon (62) supportant ladite balle (54) dans ledit intérieur (24) ;
dans lequel ledit au moins un manchon (62) présentant une surface de butée (64) et une surface de sollicitation (66) avec ladite surface de butée (64) mettant en prise ladite balle (54) et ladite surface de sollicitation (66) faisant face auxdites première et seconde surfaces de mise en prise (26, 28) et définissant un plan (P) aligné généralement sur ladite surface de sollicitation (66) et croisant lesdites première et seconde surfaces de mise en prise (26, 28) selon un angle (X), ledit élément de sollicitation (58) mettant en prise chacune desdites première et seconde surfaces de mise en prise (26, 28) et ladite surface de sollicitation (66) avec ledit alignement général de ladite surface de sollicitation (66) sur ledit angle (X) amenant ledit élément de sollicitation (58) à solliciter simultanément ledit manchon (62) loin des dites première et seconde surfaces de mise en prise (26, 28) pour supporter ladite balle (54) dans ledit intérieur (24),
**caractérisé en ce que** ledit manchon (62) présente une surface d'alignement (72) s'étendant sensiblement parallèlement à ladite deuxième surface de mise en prise (28) dudit boîtier (22), ladite surface d'alignement (72) butant sélectivement contre ladite deuxième surface de mise en prise (28) lorsque ledit manchon (62) pivote vers et loin de ladite première surface de mise en prise (26) pour orienter ledit manchon (62) par rapport audit boîtier (22),
dans lequel ledit manchon (62) présente une première paroi (74) et une seconde paroi (76) transversales l'une à l'autre, ladite surface de butée (64) étant disposée sur ladite première paroi (74) et ladite surface d'alignement (72) étant disposée sur ladite seconde paroi (76) ; et
dans lequel ledit manchon (62) définit une rainure (78) entre lesdites première et seconde parois (74, 76) et inclut une pluralité de nervures (80) disposées dans ladite rainure (78) s'étendant entre et montée sur chacune desdites première et seconde parois (74, 76) pour le support desdites première et seconde parois (74, 76) l'une par rapport à l'autre.

2. Ensemble sélecteur de vitesses (20) selon la revendication 1, dans lequel ladite première surface de mise en prise (26) et ladite deuxième surface de mise en prise (28) définissent un coin (46) et ladite surface de sollicitation (66) dudit manchon (62) fait face audit coin (46) avec ledit élément de sollicitation (58) disposé dans ledit coin (46) et mettant en prise chacune desdites première et seconde surfaces de mise en prise (26, 28) et ladite surface de sollicitation (66) pour solliciter ledit manchon (62) loin desdites première et seconde surfaces de mise en prise (26, 28).

3. Ensemble sélecteur de vitesses (20) selon la revendication 2, dans lequel ledit manchon (62) présente une surface de retenue (82) adjacente et s'étendant transversalement à ladite surface de sollicitation (66) vers ladite deuxième surface de mise en prise (28) pour retenir ledit élément de sollicitation (58) dans ledit coin (46).

4. Ensemble sélecteur de vitesses (20) selon l'une quelconque des revendications précédentes, dans lequel ledit manchon (62) présente une configuration annulaire définissant un trou (68), ladite balle (54) s'étendant dans ledit trou (68) et ladite surface de butée (64) mettant en prise sur la circonférence ladite balle (54) pour supporter ladite balle (54) dans ledit intérieur (24).

5. Ensemble sélecteur de vitesses (20) selon la revendication 4, dans lequel ledit manchon (62) présente une surface extérieure (70) opposée à ladite surface de butée (64), ladite balle (54) s'étendant dans ledit trou (68) sur ladite surface de butée (64) et ladite balle (54) étant partiellement disposée dans ledit trou (68) entre ladite surface de butée (64) et ladite surface extérieure (70).

6. Ensemble sélecteur de vitesses (20) selon la revendication 4, dans lequel ledit élément de sollicitation (58) est en outre défini en tant que joint torique (60) présentant une configuration annulaire avec ledit joint torique (60) butant contre ladite surface de sollicitation (66) dudit manchon (62) présentant ladite configuration annulaire pour la sollicitation dudit manchon (62) loin de chacune desdites première et seconde surfaces de mise en prise (26, 28).

7. Ensemble sélecteur de vitesses (20) selon la revendication 6, dans lequel ledit angle (X) dudit plan (P) s'élève à 45 degrés et ladite surface de sollicitation (66) facilite un rapport de compression dudit joint torique (60) de 1:1 x cos45°.

8. Ensemble sélecteur de vitesses (20) selon l'une quelconque des revendications précédentes, dans lequel ladite balle (54) présente un tourillon (56) s'étendant vers l'extérieur depuis ladite balle (54) transversalement audit levier (48) et pouvant tourner avec ladite balle (54) et ledit levier (48) autour dudit centre sphérique (C) pour le couplage dudit levier (48) à la transmission, ledit manchon (62) définissant un évidement (84) avec ledit tourillon (56) apte à pivoter dans ledit évidement (84) lorsque ladite balle (54) tourne autour dudit centre sphérique (C) pour l'extension du mouvement dudit tourillon (56) dans une plage de mouvement.

9. Ensemble sélecteur de vitesses (20) selon l'une quelconque des revendications précédentes, dans lequel ledit boîtier (22) présente un premier élément antirotation (86) et ledit manchon (62) présente un second élément antirotation (88), lesdits premier et second éléments antirotation (86, 88) se mettant en prise l'un avec l'autre pour empêcher la rotation dudit manchon (62) par rapport audit boîtier (22).

10. Ensemble sélecteur de vitesses (20) selon la revendication 9, dans lequel ledit premier élément antirotation (86) est en outre défini en tant qu'au moins une paroi de verrou (90) et ledit second élément antirotation (88) est en outre défini en tant qu'au moins un montant (92), ledit montant (92) mettant en prise sélectivement ladite paroi de verrou (90) pour empêcher la rotation dudit manchon (62) par rapport audit boîtier (22).

11. Ensemble sélecteur de vitesses (20) selon l'une quelconque des revendications précédentes, dans lequel ledit boîtier (22) définit une ouverture (38) avec ledit levier (48) s'étendant au travers de ladite ouverture (38) dans ledit intérieur (24) pour la rotation dudit levier (48) et ladite balle (54) en tant qu'unité autour dudit centre sphérique (C).

12. Ensemble sélecteur de vitesses (20) selon l'une quelconque des revendications précédentes, dans lequel ledit au moins un manchon (62) est en outre défini en tant que deux manchons (62) et ledit au moins un élément de sollicitation (58) est en outre défini en tant que deux éléments de sollicitation (58), lesdits manchons (62) étant disposés de manière opposée l'un à l'autre et lesdits éléments de sollicitation (58) disposés de manière opposée l'un à l'autre et adjacents audits manchons (62), lesdits éléments de sollicitation (58) sollicitant lesdits manchons (62) l'un vers l'autre pour supporter ladite balle (54) dans ledit intérieur (24).

13. Ensemble sélecteur de vitesses (20) selon l'une quelconque des revendications précédentes, dans lequel ledit boîtier (22) inclut un corps (30) et un capuchon (32), ledit capuchon (32) présentant une troisième surface de mise en prise (34) mettant en prise ledit corps (30) et faisant face audit intérieur (24).

14. Ensemble sélecteur de vitesses (20) selon la revendication 13, dans lequel ledit capuchon (32) présente une saillie (36) s'étendant depuis ladite troisième surface de mise en prise (34) avec ladite première surface de mise en prise (26) disposée sur ladite saillie (36).
